(19) **Europäisches Patentamt / European Patent Office / Office européen des brevets**

(11) **EP 4 664 563 A1**

(12) # EUROPEAN PATENT APPLICATION
published in accordance with Art. 153(4) EPC

(43) Date of publication:
**17.12.2025 Bulletin 2025/51**

(21) Application number: **24753383.9**

(22) Date of filing: **07.02.2024**

(51) International Patent Classification (IPC):
**H01M 4/62** *(2006.01)*    **C08F 212/10** *(2006.01)*
**C08F 220/18** *(2006.01)*    **H01G 11/38** *(2013.01)*
**H01M 4/13** *(2010.01)*    **H01M 4/139** *(2010.01)*

(52) Cooperative Patent Classification (CPC):
**C08F 212/10; C08F 220/18; H01G 11/38;**
**H01M 4/13; H01M 4/139; H01M 4/62;** Y02E 60/10

(86) International application number:
**PCT/JP2024/004088**

(87) International publication number:
**WO 2024/166940 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 JP 2023018278**

(71) Applicant: **ENEOS Materials Corporation**
**Tokyo 105-7109 (JP)**

(72) Inventors:
• **MASUDA, Kana**
  **Tokyo 105-7109 (JP)**
• **NAKAYAMA, Takuya**
  **Tokyo 105-7109 (JP)**

(74) Representative: **TBK**
**Bavariaring 4-6**
**80336 München (DE)**

(54) **POWER STORAGE DEVICE BINDER COMPOSITION, POWER STORAGE DEVICE ELECTRODE SLURRY, POWER STORAGE DEVICE ELECTRODE, AND POWER STORAGE DEVICE**

(57)    Provided is a binder composition for an electrical storage device that can produce an electrical storage device electrode excellent in surface state, adhesiveness, and ion conductivity, and can improve the cycle life characteristics of an electrical storage device.

The binder composition for an electrical storage device according to the present invention includes: a polymer (A); and 30 ppm to 30,000 ppm of an emulsifier (B) with respect to a total mass of the polymer (A). When a total of repeating units in the polymer (A) is defined as 100 mass%, the polymer (A) contains 1 mass% to 50 mass% of a repeating unit (a1) derived from an aromatic vinyl compound, and 20 mass% to 75 mass% of a repeating unit (a2) derived from an unsaturated carboxylic acid ester.

**EP 4 664 563 A1**

**Description**

[Technical Field]

The present invention relates to a binder composition for an electrical storage device, a slurry for an electrical storage device electrode, an electrical storage device electrode, and an electrical storage device.

[Background Art]

In recent years, an electrical storage device having a high voltage and a high energy density has been demanded as a power source for driving electronic equipment. A lithium ion battery, a lithium ion capacitor, or the like is promising as such electrical storage device.

An electrode to be used for such electrical storage device is produced by applying a composition (slurry for an electrical storage device electrode) containing an active material and a polymer that functions as a binder to a surface of a current collector and drying the composition. Characteristics demanded of the polymer to be used as a binder include a binding ability between the molecules of an active material and an adhesive ability between the active material and the current collector. The characteristics may also include powder fall-off resistance that prevents fine powder or the like of the active material from being detached from a coating film of the applied and dried composition (hereinafter sometimes referred to as "active material layer") at the time of the cutting of the active material layer. Such binder material expresses satisfactory adhesiveness and reduces the internal resistance of a battery resulting from the binder material. Thus, a satisfactory charge-discharge characteristic can be imparted to the electrical storage device.

With regard to the binding ability between the active materials, the adhesive ability between the active material and the current collector, and the powder fall-off resistance, it has been empirically revealed that their qualities of performance have a nearly proportional relationship with each other. Accordingly, in this description, those properties are hereinafter sometimes collectively referred to with the term "adhesiveness".

In recent years, in order to produce an electrochemical device excellent in capacity and charge-discharge cycle characteristic, the use of a positive electrode active material having high reactivity with water has been investigated. In addition, polyvinylidene fluoride (PVDF) has most widely been used as an organic solvent-based binder for an electrical storage device electrode. PVDF has a satisfactory binding property and oxidation resistance, but its environmental load is high because PVDF contains a fluorine atom, and the instability of the raw material supply thereof has become significant (see, for example, Patent Literature 1).

Under such background, various binder materials have been proposed with a view to solving various problems of a slurry for a positive electrode (see, for example, Patent Literatures 1 and 2).

[Citation List]

[Patent Literature]

[PTL 1] JP 10-298386 A
[PTL 2] JP 2019-194944 A

[Summary of Invention]

[Technical Problem]

However, it has been known that, in the method including using a slurry for a positive electrode that has hitherto been used, the slurry containing PVDF or sulfonated PVDF disclosed in Patent Literature 1 described above, a crosslinked product along with dehydrofluorination is formed particularly under basic conditions. When the crosslinked product is formed in the slurry for a positive electrode, adhesiveness has been inhibited in some cases. In addition, when the slurry for a positive electrode that has hitherto been used is applied, a crater is caused by bubble collapse on a surface of a coating film in some cases owing to an influence of an emulsifier or the like remaining in the slurry. Such surface defect leads to a reduction in yield of a product, and hence needs to be prevented.

Some aspects according to the present invention provide a binder composition for an electrical storage device, which can produce an electrical storage device electrode excellent in surface state, adhesiveness, and ion conductivity, and which can improve the cycle life characteristics of an electrical storage device.

[Solution to Problem]

The present invention has been made in order to solve at least part of the above-mentioned problems, and can be achieved as any one of the following aspects.

According to one aspect of the present invention, there is provided a binder composition for an electrical storage device, the binder composition including:

a polymer (A); and
30 ppm to 30,000 ppm of an emulsifier (B) with respect to a total mass of the polymer (A),
wherein when a total of repeating units in the polymer (A) is defined as 100 mass%, the polymer (A) contains
1 mass% to 50 mass% of a repeating unit (a1) derived from an aromatic vinyl compound, and
20 mass% to 75 mass% of a repeating unit (a2) derived from an unsaturated carboxylic acid ester.

In the aspect of the binder composition for an electrical storage device, the polymer (A) may further contain 0.5 mass% to 10 mass% of a repeating unit (a3) derived from an unsaturated carboxylic acid.

In any of the above aspects of the binder composition for an electrical storage device, the polymer (A) may further contain 5 mass% to 40 mass% of a repeating unit (a4) derived from an $\alpha,\beta$-unsaturated nitrile compound.

In any of the above aspects of the binder composition for an electrical storage device, the polymer (A) may further contain 0.1 mass% to 10 mass% of a repeating unit (a5) derived from a compound having a sulfonic acid group.

In any of the above aspects of the binder composition for an electrical storage device, the polymer (A) may further contain 0.1 mass% to 10 mass% of a repeating unit (a6) derived from (meth)acrylamide.

In any of the above aspects of the binder composition for an electrical storage device, the polymer (A) may further contain 5 mass% to 40 mass% of a repeating unit (a7) derived from vinylpyrrolidone.

In any of the above aspects of the binder composition for an electrical storage device, a solubility of the polymer (A) in N-methyl-2-pyrrolidone at 25°C and 1 atm may be 1 g or more per 100 g of N-methyl-2-pyrrolidone.

In any of the above aspects of the binder composition for an electrical storage device, the emulsifier (B) may be an anionic surfactant.

Any of the above aspects of the binder composition for an electrical storage device may further include a liquid medium (C) that is at least one kind selected from a group consisting of an aliphatic hydrocarbon, an alicyclic hydrocarbon, an aromatic hydrocarbon, ketones, esters, ethers, glycol ethers, lactams, lactones, and amides.

According to one aspect of the present invention, there is provided a slurry for an electrical storage device electrode, the slurry including:

any of the above aspects of the binder composition for an electrical storage device; and
an active material.

In the above aspect of the slurry for an electrical storage device electrode, the active material may be a positive electrode active material.

According to one aspect of the present invention, there is provided an electrical storage device electrode including:

a current collector; and
an active material layer formed on a surface of the current collector by applying and drying the above aspect of the slurry for an electrical storage device electrode.

According to one aspect of the present invention, there is provided an electrical storage device including the above aspect of the electrical storage device electrode.

[Advantageous Effects of Invention]

According to the binder composition for an electrical storage device of the present invention, the electrical storage device electrode excellent in surface state, adhesiveness, and ion conductivity can be produced, and the electrical storage device excellent in cycle life characteristics is provided.

[Description of Embodiments]

Preferred embodiments of the present invention are described in detail below. It should be understood that the present invention is not limited only to the embodiments described below, and encompasses various modifications that are implemented within the scope of the present invention.

Herein, the term "(meth)acrylic acid ..." represents "acrylic acid ..." or "methacrylic acid ...," the term "... (meth) acrylate" represents "... acrylate" or "... methacrylate," and the term "(meth)acrylamide" represents "acrylamide" or "methacrylamide".

Herein, a numerical range denoted as "X to Y" is to be construed to include a numerical value X as a lower limit value and a numerical value Y as an upper limit value.

1. Binder Composition for Electrical Storage Device

A binder composition for an electrical storage device according to an embodiment of the present invention includes a polymer (A) and 30 ppm to 30,000 ppm of an emulsifier (B) with respect to the total mass of the polymer (A). The components that may be incorporated into the binder composition for an electrical storage device according to this embodiment are described in detail below.

1.1. Polymer (A)

The binder composition for an electrical storage device according to this embodiment includes the polymer (A). The polymer (A) may be in the form of latex dispersed in a liquid medium (C) to be described later, or may be in a state of being dissolved in the liquid medium (C), but is preferably in a state of being dissolved in the liquid medium (C). The polymer (A) is preferably in a state of being dissolved in the liquid medium (C) because the stability of a composition (hereinafter sometimes referred to as "slurry") produced by mixing the binder composition with an active material becomes satisfactory, and the applicability of the slurry to a current collector becomes satisfactory. Further, when the polymer (A) is in a solution state, adhesive strength between the active materials is increased to improve the ion conductivity of an electrical storage device electrode. Thus, an increase in internal resistance can be reduced, and hence an electrical storage device excellent in cycle life characteristics is easily obtained.

Repeating units for forming the polymer (A), the physical properties of the polymer (A), and a production method therefor are described below in the stated order.

1.1.1. Repeating Units for forming Polymer (A)

When the total of the repeating units in the polymer (A) is defined as 100 mass%, the polymer (A) contains 1 mass% to 50 mass% of a repeating unit (a1) derived from an aromatic vinyl compound (hereinafter sometimes referred to simply as "repeating unit (a1)"), and 20 mass% to 75 mass% of a repeating unit (a2) derived from an unsaturated carboxylic acid ester (hereinafter sometimes referred to simply as "repeating unit (a2)"). In addition, the polymer (A) may contain, in addition to the repeating unit (a1) and the repeating unit (a2), a repeating unit derived from any other monomer copolymerizable therewith.

1.1.1.1. Repeating Unit (a1) derived from Aromatic Vinyl Compound

When the total of the repeating units in the polymer (A) is defined as 100 mass%, the content ratio of the repeating unit (a1) derived from an aromatic vinyl compound is from 1 mass% to 50 mass%. The lower limit of the content ratio of the repeating unit (a1) is preferably 2 mass%, more preferably 4 mass%. The upper limit of the content ratio of the repeating unit (a1) is preferably 48 mass%, more preferably 45 mass%. When the polymer (A) contains the repeating unit (a1) in the above-mentioned ranges, a satisfactory slurry characteristic is exhibited, and hence the applicability can be improved. In addition, the permeability of an electrolytic solution can be improved, and hence a satisfactory repeated charge-discharge characteristic is exhibited in some cases. Further, a satisfactory binding force to graphite or the like to be used as the active material is exhibited in some cases, and hence an electrical storage device electrode excellent in adhesiveness is obtained.

The aromatic vinyl compound is not particularly limited, but examples thereof include styrene, $\alpha$-methylstyrene, p-methylstyrene, vinyltoluene, chlorostyrene, and divinylbenzene, and one or more kinds selected therefrom may be used. Of those, styrene is particularly preferred.

1.1.1.2. Repeating Unit (a2) derived from Unsaturated Carboxylic Acid Ester

When the total of the repeating units in the polymer (A) is defined as 100 mass%, the content ratio of the repeating unit (a2) derived from an unsaturated carboxylic acid ester is from 20 mass% to 75 mass%. The lower limit of the content ratio of the repeating unit (a2) is preferably 22 mass%, more preferably 25 mass%. The upper limit of the content ratio of the repeating unit (a2) is preferably 68 mass%, more preferably 65 mass%. When the polymer (A) contains the repeating unit (a2) in the above-mentioned ranges, affinity between the polymer (A) and an electrolytic solution becomes satisfactory, and hence an increase in internal resistance caused by a binder serving as an electrical resistance component in an electrical storage device can be reduced.

Of the unsaturated carboxylic acid esters, an aliphatic unsaturated carboxylic acid ester is particularly preferred. Of those, a (meth)acrylic acid ester and an itaconic acid diester may be preferably used. Specific examples of the (meth) acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth) acrylate, 5-hydroxypentyl (meth)acrylate, 6-hydroxyhexyl (meth)acrylate, glycerol mono(meth)acrylate, and glycerol di(meth)acrylate, and one or more kinds selected therefrom may be used. Specific examples of the itaconic acid diester include dimethyl itaconate, diethyl itaconate, 1-ethyl 4-methyl itaconate, dipropyl itaconate, diisopropyl itaconate, and dibutyl itaconate, and one or more kinds selected therefrom may be used. Of those, one or more kinds selected from methyl (meth)acrylate, ethyl (meth)acrylate, n-butyl (meth)acrylate, 2-ethylhexyl (meth)acrylate, cyclohexyl (meth)acrylate, and hydroxyethyl (meth)acrylate are preferred, and one or more kinds selected from methyl (meth)acrylate, n-butyl (meth) acrylate, and 2-ethylhexyl (meth)acrylate are more preferred.

### 1.1.1.3. Other Repeating Units

The polymer (A) may contain, in addition to the repeating unit (a1) and the repeating unit (a2), a repeating unit derived from any other monomer copolymerizable therewith. Examples of such repeating unit include: a repeating unit (a3) derived from an unsaturated carboxylic acid (hereinafter sometimes referred to simply as "repeating unit (a3)"); a repeating unit (a4) derived from an $\alpha,\beta$-unsaturated nitrile compound (hereinafter sometimes referred to simply as "repeating unit (a4)"); a repeating unit (a5) derived from a compound having a sulfonic acid group (hereinafter sometimes referred to simply as "repeating unit (a5)"); a repeating unit (a6) derived from (meth)acrylamide (hereinafter sometimes referred to simply as "repeating unit (a6)"); a repeating unit (a7) derived from vinylpyrrolidone (hereinafter sometimes referred to simply as "repeating unit (a7)"); and a repeating unit derived from a cationic monomer.

<Repeating Unit (a3) derived from Unsaturated Carboxylic Acid>

The polymer (A) may contain the repeating unit (a3) derived from an unsaturated carboxylic acid. When the total of the repeating units in the polymer (A) is defined as 100 mass%, the content ratio of the repeating unit (a3) is preferably from 0.5 mass% to 10 mass%. The lower limit of the content ratio of the repeating unit (a3) is more preferably 0.7 mass%, particularly preferably 1 mass%. The upper limit of the content ratio of the repeating unit (a3) is more preferably 9 mass%, particularly preferably 8 mass%. When the polymer (A) contains the repeating unit (a3) in the above-mentioned ranges, the binding property between the current collector and an active material layer can be improved, and hence the adhesive strength of the electrode is improved in some cases.

The unsaturated carboxylic acid is not particularly limited, but examples thereof include: monocarboxylic acids, such as acrylic acid, methacrylic acid, and crotonic acid; and dicarboxylic acids (including anhydrides thereof), such as maleic acid, fumaric acid, and itaconic acid, and monoesters thereof, and one or more kinds selected therefrom may be used. Of those, one or more kinds selected from acrylic acid, methacrylic acid, itaconic acid, and an itaconic acid monoester are preferably used. Specific examples of the itaconic acid monoester include monobutyl itaconate, monoethyl itaconate, monopropyl itaconate, monoisopropyl itaconate, and monobutyl itaconate.

<Repeating Unit (a4) derived from $\alpha,\beta$-Unsaturated Nitrile Compound>

The polymer (A) may contain the repeating unit (a4) derived from an $\alpha,\beta$-unsaturated nitrile compound. When the total of the repeating units in the polymer (A) is defined as 100 mass%, the content ratio of the repeating unit (a4) is preferably from 5 mass% to 40 mass%. The lower limit of the content ratio of the repeating unit (a4) is more preferably 6 mass%, particularly preferably 7 mass%. The upper limit of the content ratio of the repeating unit (a4) is more preferably 38 mass%, particularly preferably 35 mass%. When the polymer (A) contains the repeating unit (a4) in the above-mentioned ranges, affinity between the polymer (A) and an electrolytic solution becomes satisfactory, and hence an increase in internal resistance caused by a binder serving as an electrical resistance component in an electrical storage device can be reduced in some cases.

The $\alpha,\beta$-unsaturated nitrile compound is not particularly limited, but examples thereof include acrylonitrile, methacrylonitrile, $\alpha$-chloroacrylonitrile, $\alpha$-ethylacrylonitrile, vinylidene cyanide, isopropylidenemalononitrile, fumaronitrile, and tetracyanoethylene, and one or more kinds selected therefrom may be used. Of those, one or more kinds selected from acrylonitrile, methacrylonitrile, isopropylidenemalononitrile, fumaronitrile, and tetracyanoethylene are preferred, and one or more kinds selected from acrylonitrile, isopropylidenemalononitrile, fumaronitrile, and tetracyanoethylene are more preferred.

<Repeating Unit (a5) derived from Compound having Sulfonic Acid Group>

The polymer (A) may contain the repeating unit (a5) derived from a compound having a sulfonic acid group. The compound having a sulfonic acid group is not particularly limited, but examples thereof include compounds, such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, acrylamide tert-butylsulfonic acid, 2-hydroxy-3-acrylamidopropanesulfonic acid, and 3-allyloxy-2-hydroxypropanesulfonic acid, and alkali salts thereof, and one or more kinds selected therefrom may be used.

When the total of the repeating units in the polymer (A) is defined as 100 mass%, the content ratio of the repeating unit (a5) derived from a compound having a sulfonic acid group is preferably from 0.1 mass% to 10 mass%. The lower limit of the content ratio of the repeating unit (a5) is more preferably 0.5 mass%, particularly preferably 1 mass%. The upper limit of the content ratio of the repeating unit (a5) is more preferably 8 mass%, particularly preferably 6 mass%. When the polymer (A) contains the repeating unit (a5) in the above-mentioned ranges, the dispersibility of an active material or a filler becomes satisfactory, and hence a homogeneous active material layer or protective film can be produced. Accordingly, a structural defect in the electrode plate of the electrical storage device is eliminated, and hence the device exhibits a satisfactory charge-discharge characteristic in some cases.

<Repeating Unit (a6) derived from (Meth)acrylamide>

The polymer (A) may contain the repeating unit (a6) derived from (meth)acrylamide. When the total of the repeating units in the polymer (A) is defined as 100 mass%, the content ratio of the repeating unit (a6) is preferably from 0 mass% to 10 mass%. The lower limit of the content ratio of the repeating unit (a6) is more preferably 0.5 mass%, particularly preferably 1 mass%. The upper limit of the content ratio of the repeating unit (a6) is more preferably 8 mass%, particularly preferably 6 mass%. When the polymer (A) contains the repeating unit (a6) in the above-mentioned ranges, the dispersibility of an active material in a slurry becomes satisfactory in some cases. In addition, an active material layer to be obtained has moderate flexibility, and hence adhesiveness between a current collector and the active material layer is improved in some cases. Further, a binding ability between active materials, such as NMC and NCA, can be enhanced, and hence an active material layer that is more satisfactory in terms of flexibility and adhesiveness for a current collector is obtained in some cases.

The (meth)acrylamide is not particularly limited, but examples thereof may include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, maleic acid amide, and acrylamide tert-butylsulfonic acid, and one or more kinds selected therefrom may be used.

<Repeating Unit (a7) derived from Vinylpyrrolidone>

The polymer (A) may contain the repeating unit (a7) derived from vinylpyrrolidone. When the total of the repeating units in the polymer (A) is defined as 100 mass%, the content ratio of the repeating unit (a7) is preferably from 5 mass% to 40 mass%. The lower limit of the content ratio of the repeating unit (a7) is more preferably 6 mass%, particularly preferably 7 mass%. The upper limit of the content ratio of the repeating unit (a7) is more preferably 38 mass%, particularly preferably 35 mass%. When the polymer (A) contains the repeating unit (a7) in the above-mentioned ranges, affinity between the polymer (A) and an electrolytic solution becomes satisfactory, and hence an increase in internal resistance caused by a binder serving as an electrical resistance component in an electrical storage device can be reduced in some cases.

<Repeating Unit derived from Cationic Monomer>

The polymer (A) may contain the repeating unit derived from a cationic monomer. The cationic monomer is not particularly limited, but is preferably at least one kind of monomer selected from a group consisting of a secondary amine (salt), a tertiary amine (salt), and a quaternary ammonium salt. Specific examples of the cationic monomer include 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylideneamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-yl)-N-methyl-1-naphthylmethylamine hydrochloride, and one or more kinds selected therefrom may be used.

1.1.2. Physical Properties of Polymer (A)

1.1.2.1. Weight Average Molecular Weight (Mw) of THF-soluble Components

The ratio of the polymer (A) having a weight average molecular weight (Mw) of tetrahydrofuran (THF)-soluble components of 1,000,000 or more in terms of polystyrene by a gel permeation chromatography (GPC) method is preferably from 3% to 70%, more preferably from 4% to 68%, particularly preferably from 5% to 65% with respect to the total area of the obtained peaks. When the ratio of the polymer (A) having a weight average molecular weight (Mw) of 1,000,000 or more falls within the above-mentioned ranges, the stability of the slurry produced by mixing the polymer (A) with an active material becomes satisfactory, and the applicability of the slurry to a current collector becomes satisfactory. In addition, the binding property between particles of an active material and a filler such as a conductive aid is improved by the polymer (A) to facilitate the provision of a lithium ion secondary battery excellent in charge-discharge characteristic. In addition, the resistance of the electrode plate to an external force, such as pressing or bending, at the time of the production of the lithium ion secondary battery is improved. The weight average molecular weight of the THF-soluble components may be measured by using a method described in Examples herein.

1.1.2.2. Solubility in N-Methyl-2-pyrrolidone

The solubility of the polymer (A) in N-methyl-2-pyrrolidone (hereinafter sometimes referred to as "NMP") at 25°C and 1 atm is preferably 1 g or more per 100 g of NMP. The solubility of the polymer (A) in NMP of 1 g or more with respect to NMP means that the polymer (A) is soluble in an organic solvent. The polymer (A) is preferably soluble in an organic solvent because of the following reasons: the surface of an active material can be easily coated with the polymer (A) excellent in flexibility and adhesiveness, and hence the detachment of the active material due to its stretching and shrinking at the time of charge and discharge can be effectively reduced, to thereby facilitate the provision of an electrical storage device exhibiting a satisfactory charge-discharge durability characteristic; and the stability of the slurry becomes satisfactory, and the applicability of the slurry to a current collector also becomes satisfactory.

1.1.3. Production Method for Polymer (A)

<Polymerization Step>

The synthesis of the polymer (A) is not particularly limited, but may be performed by, for example, an emulsion polymerization method, which is performed in the presence of a known emulsifier, chain transfer agent, polymerization initiator, and the like.

Examples of the emulsifier may include: anionic surfactants, such as a sulfuric acid ester salt of a higher alcohol, an alkylbenzenesulfonic acid salt, an alkylnaphthalenesulfonic acid salt, a dialkylsulfosuccinic acid salt, an alkyl diphenyl ether disulfonic acid salt, an aliphatic sulfonic acid salt, an aliphatic carboxylic acid salt, a dehydroabietic acid salt, a naphthalenesulfonic acid-formalin condensate, and a sulfuric acid ester salt of a nonionic surfactant; nonionic surfactants, such as an alkyl ester of polyethylene glycol, an alkyl phenyl ether of polyethylene glycol, and an alkyl ether of polyethylene glycol; and fluorine-based surfactants, such as a perfluorobutylsulfonic acid salt, a perfluoroalkyl group-containing phosphoric acid ester, a perfluoroalkyl group-containing carboxylic acid salt, and a perfluoroalkyl ethylene oxide adduct, and one or more kinds selected therefrom may be used.

Compounds described in, for example, JP 5999399 B2 may be used as the chain transfer agent and the polymerization initiator.

The emulsion polymerization method for synthesizing the polymer (A) may be performed by one-stage polymerization, or may be performed by multistage polymerization including two or more stages of polymerization.

When the synthesis of the polymer (A) is performed by one-stage polymerization, a mixture of the above-mentioned monomers may be subjected to emulsion polymerization in the presence of an appropriate emulsifier, chain transfer agent, polymerization initiator, and the like at a temperature of preferably from 0°C to 80°C for a polymerization time of preferably from 4 hours to 36 hours.

When the synthesis of the polymer (A) is performed by two-stage polymerization, the polymerization of each stage is preferably set as described below.

The usage ratio of monomers to be used in the first stage polymerization is set to fall within preferably the range of from 20 mass% to 99 mass%, more preferably the range of from 25 mass% to 99 mass% with respect to the total mass of monomers (sum of the mass of the monomers to be used in the first stage polymerization and the mass of monomers to be used in the second stage polymerization). A case in which the first stage polymerization is performed at such usage ratio of the monomers is preferred because particles of the polymer (A), which are excellent in dispersion stability and hence hardly cause an aggregate, can be obtained, and besides, an increase in viscosity of the binder composition for an electrical storage device after solidification over time is reduced.

The kinds and usage ratio of the monomers to be used in the second stage polymerization may be the same as or different from the kinds and usage ratio of the monomers to be used in the first stage polymerization.

Polymerization conditions in each stage are preferably set as described below from the viewpoint of the dispersibility of the particles of the polymer (A) to be obtained.

- First stage polymerization: a temperature of preferably from 0°C to 80°C; a polymerization time of preferably from 2 hours to 36 hours; and a polymerization conversion rate of preferably 50 mass% or more, more preferably 60 mass% or more.
- Second stage polymerization: a temperature of preferably from 0°C to 80°C; and a polymerization time of preferably from 2 hours to 18 hours.

When the synthesis of the polymer (A) is performed by three-stage polymerization, the polymerization of each stage is preferably set as described below.

The usage ratio of monomers to be used in the first stage polymerization is set to fall within preferably the range of from 20 mass% to 90 mass%, more preferably the range of from 25 mass% to 80 mass% with respect to the total mass of monomers (sum of the mass of the monomers to be used in the first stage polymerization, the mass of monomers to be used in the second stage polymerization, and the mass of monomers to be used in the third stage polymerization). A case in which the first stage polymerization is performed at such usage ratio of the monomers is preferred because particles of the polymer (A), which are excellent in dispersion stability and hence hardly cause an aggregate, can be obtained, and besides, an increase in viscosity of the binder composition for an electrical storage device after solidification over time is reduced.

The kinds and usage ratio of the monomers to be used in the second stage polymerization may be the same as or different from the kinds and usage ratio of the monomers to be used in the first stage polymerization.

The kinds and usage ratio of the monomers to be used in the third stage polymerization may be the same as or different from the kinds and usage ratio of the monomers to be used in the first stage polymerization, and the kinds and usage ratio of the monomers to be used in the second stage polymerization.

Polymerization conditions in each stage are preferably set as described below from the viewpoint of the dispersibility of the particles of the polymer (A) to be obtained.

- First stage polymerization: a temperature of preferably from 0°C to 80°C; a polymerization time of preferably from 2 hours to 36 hours; and a polymerization conversion rate of preferably 50 mass% or more, more preferably 60 mass% or more.
- Second stage polymerization: a temperature of preferably from 0°C to 80°C; and a polymerization time of preferably from 2 hours to 18 hours.
- Third stage polymerization: a temperature of preferably from 0°C to 80°C; and a polymerization time of preferably from 2 hours to 9 hours.

When a total solid content concentration in the emulsion polymerization is set to 50 mass% or less, the polymerization reaction can be allowed to proceed under a state in which the dispersion stability of the particles of the polymer (A) to be obtained is satisfactory. The total solid content concentration is preferably 45 mass% or less, more preferably 40 mass% or less.

Irrespective of whether the synthesis of the polymer (A) is performed by one-stage polymerization or by multistage polymerization, after the completion of the emulsion polymerization, a neutralizer is preferably added to the polymerization mixture to perform neutralization. The neutralizer to be used in this case is not particularly limited, but examples thereof include: metal hydroxides, such as sodium hydroxide and potassium hydroxide; and ammonia.

<Solidification Step>

Then, the polymer is solidified by adding a coagulant to the emulsion polymerization liquid obtained in the above-mentioned polymerization step to provide a water-containing crumb (solidified product containing the polymer, the coagulant, and water).

A monovalent or more and trivalent or less metal salt may be suitably used as the coagulant, and examples thereof include magnesium sulfate, sodium chloride, and calcium chloride. Of those, sodium chloride and calcium chloride are preferred. The usage amount of the coagulant is preferably 1 part by mass or more and 20 parts by mass or less, more preferably 2 parts by mass or more and 15 parts by mass or less with respect to 100 parts by mass of the polymer in the emulsion polymerization liquid.

A solidification temperature is not particularly limited, but is preferably 40°C or more and 90°C or less, more preferably 45°C or more and 80°C or less.

<Washing Step>

Then, the water-containing crumb obtained in the above-mentioned solidification step is washed. When the water-containing crumb is washed, the residual amount of a component other than the polymer (e.g., the coagulant) can be reduced.

A washing method is not particularly limited, but an example thereof is a method in which water is used as a washing liquid, and water washing is performed by mixing the water-containing crumb and water added thereto. A temperature at the time of the water washing is not particularly limited, but is preferably 5°C or more and 70°C or less, more preferably 10°C or more and 60°C or less. In addition, a mixing time is not particularly limited, but is preferably 1 minute or more and 60 minutes or less, more preferably 2 minutes or more and 45 minutes or less.

In addition, the amount of the water to be added to the water-containing crumb at the time of the water washing is not particularly limited, but from the viewpoint that the content (residual amount) of the coagulant in the binder composition for an electrical storage device to be finally obtained can be effectively reduced, the amount of the water is preferably 150 parts by mass or more and 10,000 parts by mass or less, more preferably 150 parts by mass or more and 5,000 parts by mass or less with respect to 100 parts by mass of the polymer in the water-containing crumb.

The number of times of the water washing is not particularly limited, and may be once, but from the viewpoint of reducing the content (residual amount) of the coagulant in the binder composition for an electrical storage device to be finally obtained, the number of times is preferably 2 times or more and 10 times or less, more preferably 3 times or more and 8 times or less. From the viewpoint of reducing the content (residual amount) of the coagulant in the binder composition for an electrical storage device to be finally obtained, the number of times of the water washing is desirably as large as possible. However, even when the washing is performed at a number of times exceeding the above-mentioned ranges, the influence of a reduction in manufacturing efficiency due to an increase in number of steps is increased while a removing effect on the coagulant is small. Further, in order to further reduce the content (residual amount) of the coagulant, a completely different step, for example, solidification by a method such as dissolution in an organic solvent such as toluene, followed by loading into methanol, is required. Accordingly, a solidification water washing method having industrially satisfactory manufacturing efficiency is preferably performed, and the number of times of the water washing is preferably set to fall within the above-mentioned ranges. In addition, in the washing step, acid washing using an acid as a washing liquid may be further performed after the water washing is performed.

<Drying Step>

Then, the water-containing crumb subjected to the above-mentioned washing step is dried to provide a solidified and dried product containing the polymer and the coagulant. A drying method that may be used in the drying step is not particularly limited, but the drying may be performed by using, for example, a dryer, such as a screw-type extruder, a kneader-type dryer, an expander dryer, a hot-air dryer, or a reduced-pressure dryer. In addition, a drying method using a combination thereof may be used. Further, before the drying is performed through the drying step, the water-containing crumb may be subjected to separation using, for example, a sieve, such as a rotary screen or a vibration screen, or a centrifugal dehydrator as required.

A drying temperature in the drying step is not particularly limited, and varies depending on the dryer to be used for the drying, but is, for example, when the hot-air dryer is used, the drying temperature is preferably set to 60°C or more and 200°C or less, and is more preferably set to 70°C or more and 180°C or less.

1.2. Emulsifier (B)

The binder composition for an electrical storage device according to this embodiment includes 30 ppm to 30,000 ppm of the emulsifier (B) with respect to the total mass of the polymer (A). The lower limit value of the content ratio of the emulsifier (B) is preferably 50 ppm, more preferably 100 ppm with respect to the total mass of the polymer (A). The upper limit value of the content ratio of the emulsifier (B) is preferably 25,000 ppm, more preferably 20,000 ppm with respect to the total mass of the polymer (A). When the binder composition for an electrical storage device includes the emulsifier (B) at the above-mentioned ratio, fusion between particles of a binder in a coating film of a slurry can be reduced. Accordingly, an increase in internal resistance of an electrical storage device is reduced, and hence the device exhibits a satisfactory repeated charge-discharge characteristic. In addition, the occurrence of a crater due to bubble collapse derived from the emulsifier on the surface of the coating film of the slurry can be reduced.

As described above, the emulsifier is used at the time of the polymerization of the polymer (A), but the amount of a residual emulsifier varies depending on conditions for, for example, the subsequent solidification step and washing step. Accordingly, in general, a residual emulsifier is not appropriately managed. It has been found that, in the binder composition for an electrical storage device of the invention of the present application, satisfactory battery characteristics are exhibited by appropriately managing the amount of the emulsifier in the production process. That is, when the amount of the emulsifier is equal to or less than the upper limit value, the occurrence of the crater due to bubble collapse derived from the emulsifier on the surface of the coating film of the slurry can be effectively reduced. In addition, when the amount of the emulsifier is equal to or more than the lower limit value, fusion between particles of the binder in the coating film of the slurry can be reduced. Accordingly, the increase in internal resistance of an electrical storage device is reduced, and hence the device exhibits a satisfactory repeated charge-discharge characteristic. In particular, in an electrode layer, when an electron conductive path cannot be maintained, the lithium ion conductivity thereof is reduced and the resistance thereof is increased. Accordingly, it is Important to reduce the inhibition of the conductive path caused by the fusion between particles of the binder.

Examples of the emulsifier (B) include the emulsifiers given as examples in the above-mentioned polymerization step. Of those, an anionic surfactant is preferred, and an alkylbenzenesulfonic acid salt, an alkylnaphthalenesulfonic acid salt, a dialkylsulfosuccinic acid salt, an alkyl diphenyl ether disulfonic acid salt, an aliphatic sulfonic acid salt, an aliphatic carboxylic acid salt, and a dehydroabietic acid salt are more preferred.

### 1.3. Liquid Medium (C)

The binder composition for an electrical storage device according to this embodiment includes the liquid medium (C). The liquid medium (C) is not particularly limited, but there may be used, for example: aliphatic hydrocarbons, such as hexane, heptane, octane, decane, and dodecane; alicyclic hydrocarbons, such as cyclohexane, cycloheptane, cyclooctane, and cyclodecane; aromatic hydrocarbons, such as toluene, xylene, mesitylene, naphthalene, and tetralin; ketones, such as methyl hexyl ketone and dipropyl ketone; esters, such as butyl acetate, butyl butyrate, and methyl butanoate; ethers, such as dibutyl ether, tetrahydrofuran, and anisole; lactams, such as N-methyl-2-pyrrolidone and 2-pyrrolidone; amides, such as N-methylacetamide, dimethylacetamide, N-methylformamide, and dimethylformamide; lactams, such as $\beta$-lactam, $\gamma$-lactam, and $\sigma$-lactam; glycol ethers, such as (mono, di, tri, or poly)ethylene glycol monomethyl ether, (mono, di, tri, poly)ethylene glycol dimethyl ether, and ethylene glycol phenyl ether; and an aqueous medium containing water. Those solvents may be used alone or in combination thereof.

The content ratio of the liquid medium (C) in the binder composition for an electrical storage device according to this embodiment is preferably from 100 parts by mass to 10,000 parts by mass, more preferably from 500 parts by mass to 2,000 parts by mass with respect to 100 parts by mass of the polymer (A). When the content ratio of the liquid medium (C) is equal to or more than the lower limit value, the mixing property of the polymer (A) and the active material becomes satisfactory at the time of the preparation of the slurry. Meanwhile, when the content ratio of the liquid medium (C) is equal to or less than the upper limit value, the applicability of the slurry becomes satisfactory at the time of the production of the active material layer, and hence the concentration gradient of the polymer (A) or the active material is less liable to occur in the drying treatment after the application. In addition, the applicability of the slurry including the active material and the conductive aid, and the binder composition for an electrical storage device becomes satisfactory at the time of the production of the electrode layer, and hence the concentration gradient of the polymer (A) is less liable to occur in the drying treatment after the application.

### 1.4. Other Additives

The binder composition for an electrical storage device according to this embodiment may include an additive other than the above-mentioned components as required. Examples of such additive include a polymer other than the polymer (A), an antioxidant, and a thickener.

<Polymer other than Polymer (A)>

The binder composition for an electrical storage device according to this embodiment may include a polymer other than the polymer (A). Such polymer is not particularly limited, but examples thereof include: an acrylic polymer containing an unsaturated carboxylic acid ester or a derivative thereof as a constituent unit; and a fluorine-based polymer such as polyvinylidene fluoride (PVDF). Those polymers may be used alone or in combination thereof. The incorporation of any such polymer further improves flexibility and adhesiveness in some cases.

<Antioxidant>

The binder composition for an electrical storage device according to this embodiment may include an antioxidant. When the binder composition includes an antioxidant, the low-temperature cycle characteristic of an electrical storage device to be obtained and the low-temperature output characteristic thereof can be further improved in some cases. In addition, the oxidation resistance of the polymer components can be further improved in some cases.
Examples of the antioxidant include compounds, such as a phenol-based antioxidant, an amine-based antioxidant, a quinone-based antioxidant, an organic phosphorus-based antioxidant, a sulfur-based antioxidant, and a phenothiazine-based antioxidant. Of those, a phenol-based antioxidant and an amine-based antioxidant are preferred.

<Thickener>

The binder composition for an electrical storage device according to this embodiment may include a thickener. The incorporation of the thickener can further improve the applicability of a slurry, the charge-discharge characteristic of an electrical storage device to be obtained, and the like in some cases.
Examples of the thickener include: cellulose-based polymers, such as carboxymethyl cellulose, methyl cellulose, ethyl cellulose, and hydroxypropyl cellulose; poly(meth)acrylic acid; ammonium salts or alkali metal salts of the cellulose compounds or the poly(meth)acrylic acid; modified polyvinyl alcohol and polyethylene oxide; and polyvinylpyrrolidone, polycarboxylic acid, starch oxide, starch phosphate, casein, various modified starches, chitin, and a chitosan derivative. Of those, cellulose-based polymers are preferred.
As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).
When the binder composition for an electrical storage device according to this embodiment includes the thickener, the content ratio of the thickener is preferably 5 mass% or less, more preferably from 0.1 mass% to 3 mass% with respect to 100 mass% of the total solid content of the binder composition for an electrical storage device.

2. Slurry for Electrical Storage Device Electrode

A slurry for an electrical storage device electrode according to an embodiment of the present invention includes the above-mentioned binder composition for an electrical storage device, and an active material. The slurry for an electrical storage device electrode according to this embodiment may be used as a material for producing an electrical storage device electrode (active material layer) improved in binding ability between the molecules of an active material and adhesive ability between the active material and a current collector, and in powder fall-off resistance. Specifically, the slurry for an electrical storage device electrode according to this embodiment is applied to a surface of the current collector, and then dried. Thus, the active material layer can be produced on the surface of the current collector.
In general, a slurry for a positive electrode often includes PVDF in order to reduce an increase in internal resistance. Meanwhile, the slurry for an electrical storage device electrode according to this embodiment can reduce an increase in internal resistance even when the slurry includes only the above-mentioned polymer (A) as a polymer component. Of course, the slurry for an electrical storage device electrode according to this embodiment may include a polymer other than the polymer (A) and a thickener in order to further reduce an increase in internal resistance. The components that may be incorporated into the slurry for an electrical storage device electrode according to this embodiment are described below.

2.1. Binder Composition for Electrical Storage Device

The composition and physical properties of the binder composition for an electrical storage device, and a production method therefor are as described above, and hence the description thereof is omitted.
The content ratio of the polymer component in the slurry for an electrical storage device electrode according to this embodiment is preferably from 0.5 part by mass to 10 parts by mass, more preferably from 1 part by mass to 8 parts by mass, still more preferably from 1 part by mass to 7 parts by mass, particularly preferably from 1.5 parts by mass to 6 parts by mass with respect to 100 parts by mass of the active material. When the content ratio of the polymer component falls within the above-mentioned ranges, the dispersibility of the active material in the slurry becomes satisfactory, and the applicability of the slurry also becomes excellent. In this case, the polymer component includes the polymer (A), and the polymer other than the polymer (A) and the thickener to be added as required.

2.2. Active Material

Examples of the active material to be used for the slurry for an electrical storage device electrode according to this embodiment include a positive electrode active material and a negative electrode active material. Specific examples thereof include a carbon material, a silicon material, an oxide containing a lithium atom, a sulfur compound, a lead compound, a tin compound, an arsenic compound, an antimony compound, an aluminum compound, a conductive polymer such as polyacene, a composite metal oxide represented by $A_XB_YO_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10>X>0.05$, $4.00>Y>0.85$, and $5.00>Z>1.5$, respectively), and other metal oxides. Specific examples thereof include compounds described in JP 5999399 B2.

The slurry for an electrical storage device electrode according to this embodiment may be used in the production of any one of electrodes including a positive electrode and a negative electrode, but is particularly preferably used for the positive electrode.

When the positive electrode is produced, the active material is preferably the oxide containing a lithium atom among the active materials given as examples above. The oxide containing a lithium atom is, for example, one or more kinds each represented by the following general formula (1), and selected from lithium manganate, lithium nickelate, lithium cobaltate, and lithium manganese nickel cobaltate.

$$Li_{1-x}M_x(AO_4) \cdots \qquad (1)$$

(In the formula (1), M represents an ion of at least one kind of metal selected from a group consisting of Mg, Ti, V, Nb, Ta, Cr, Mn, Fe, Co, Ni, Cu, Zn, Al, Ga, Ge, and Sn, A represents at least one kind selected from a group consisting of Si, S, P, and V, and "x" represents a number satisfying the relationship of $0<x<1$.)

The value of "x" in the general formula (1) is selected in accordance with the valences of M and A so that the valence of the entirety of the general formula (1) may be zero-valent.

An olivine-type lithium-containing phosphoric acid compound is, for example, $LiFePO_4$, $LiCoPO_4$, $LiMnPO_4$, or $Li_{0.90}Ti_{0.05}Nb_{0.05}Fe_{0.30}Co_{0.30}Mn_{0.30}PO_4$. Of those, $LiFePO_4$ (lithium iron phosphate) is particularly preferred because an iron compound serving as a raw material therefor is easily available and inexpensive.

The average particle diameter of the olivine-type lithium-containing phosphoric acid compound preferably falls within the range of from 1 $\mu$m to 30 $\mu$m, more preferably falls within the range of from 1 $\mu$m to 25 $\mu$m, and particularly preferably falls within the range of from 1 $\mu$m to 20 $\mu$m.

In addition, active materials given as examples below may each be incorporated into the active material layer. The examples include: a conductive polymer such as polyacene; a composite metal oxide represented by $A_XB_YO_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10>X>0.05$, $4.00>Y>0.85$, and $5.00>Z>1.5$, respectively); and other metal oxides.

Examples of the composite metal oxide include lithium cobaltate, lithium nickelate, lithium manganate, and ternary lithium nickel cobalt manganate.

An electrical storage device electrode produced by using the slurry for an electrical storage device electrode according to this embodiment can exhibit satisfactory electrical characteristics even in the case of using the oxide containing a lithium atom as the positive electrode active material. A conceivable reason therefor is that the polymer (A) can firmly bind the molecules of the oxide containing a lithium atom, and at the same time, can maintain the state of firmly binding the molecules of the oxide containing a lithium atom even during charge and discharge.

Meanwhile, when the negative electrode is produced, the active material is preferably an active material containing the silicon material and/or the carbon material, more preferably a mixture of the silicon material and the carbon material among the active materials given as examples above. The silicon material has a large lithium storage capacity per unit weight as compared to other active materials, and hence can increase the electrical storage capacity of an electrical storage device to be obtained. As a result, the output and energy density of the electrical storage device can be increased. Meanwhile, the carbon material undergoes a smaller volume change along with charge and discharge than the silicon material, and hence, through use of the mixture of the silicon material and the carbon material as the negative electrode active material, the influence of the volume change of the silicon material can be alleviated. Accordingly, the adhesive ability between the active material layer and a current collector can be further improved.

When silicon (Si) is used as the active material, silicon causes a large volume change when storing lithium, though having a high capacity. Accordingly, the silicon material has a property of being finely powdered through repeated expansion and contraction to cause peeling from a current collector, or separation between the active materials, with the result that disruption of a conductive network in the active material layer is liable to occur. With this property, the charge-discharge durability characteristic of the electrical storage device is extremely degraded within a short period of time.

In this regard, an electrical storage device electrode produced by using the slurry for an electrical storage device electrode according to this embodiment can exhibit satisfactory electrical characteristics without the occurrence of such problem as described above even in the case of using the silicon material. A conceivable reason therefor is that the polymer (A) can firmly bind the silicon material, and at the same time, even when the silicon material expands in volume by storing lithium, the polymer (A) can stretch and shrink to maintain the state of firmly binding the silicon material.

The content ratio of the silicon material in 100 mass% of the active material is set to preferably 1 mass% or more, more preferably from 2 mass% to 50 mass%, still more preferably from 3 mass% to 45 mass%, particularly preferably from 10 mass% to 40 mass%. When the content ratio of the silicon material in 100 mass% of the active material falls within the above-mentioned ranges, there is obtained an electrical storage device excellent in balance between the improvements in output and energy density of the electrical storage device, and the charge-discharge durability characteristic thereof.

The shape of the active material is preferably a particulate shape. The average particle diameter of the active material is preferably from 0.1 $\mu$m to 100 $\mu$m, more preferably from 1 $\mu$m to 20 $\mu$m.

2.3. Other Components

In addition to the above-mentioned components, a component, such as a polymer other than the polymer (A), a thickener, a liquid medium, a conductive aid, a pH adjusting agent, a corrosion inhibitor, an antioxidant, or a cellulose fiber, may be added to the slurry for an electrical storage device electrode according to this embodiment as required. The polymer other than the polymer (A) and the thickener may be appropriately selected from the compounds given as examples in the above-mentioned "1.4. Other Additives" section, and may be used for similar purposes and at similar content ratios.

<Liquid Medium>

A liquid medium may be further added to the slurry for an electrical storage device electrode according to this embodiment in addition to the liquid medium included in the binder composition for an electrical storage device. The liquid medium to be added may be the same kind of liquid medium as the liquid medium (C) included in the binder composition for an electrical storage device, or may be different therefrom, but a liquid medium selected from the liquid media given as examples in the above-mentioned "1.3. Liquid Medium (C)" section is preferably used.

The content ratio of the liquid medium (including the liquid medium included in the binder composition for an electrical storage device) in the slurry for an electrical storage device electrode according to this embodiment is set to such a ratio that the solid content concentration in the slurry (which refers to the ratio of the total mass of the components other than the liquid medium in the slurry to the total mass of the slurry; the same applies hereinafter) becomes preferably from 30 mass% to 70 mass%, more preferably from 40 mass% to 60 mass%.

<Conductive Aid>

A conductive aid may be further added to the slurry for an electrical storage device electrode according to this embodiment for the purposes of imparting conductivity and buffering the volume change of the active material caused by the entrance and exit of lithium ions.

Specific examples of the conductive aid include carbons, such as activated carbon, acetylene black, ketjen black, furnace black, graphite, a carbon fiber, fullerene, and a carbon nanotube. Of those, acetylene black, ketjen black, or a carbon nanotube may be preferably used. The content ratio of the conductive aid is preferably 20 parts by mass or less, more preferably from 1 part by mass to 15 parts by mass, particularly preferably from 2 parts by mass to 10 parts by mass with respect to 100 parts by mass of the active material.

<pH Adjusting Agent>

A pH adjusting agent may be further added to the slurry for an electrical storage device electrode according to this embodiment for the purpose of reducing the corrosion of a current collector in accordance with the kind of the active material.

Examples of the pH adjusting agent may include hydrochloric acid, phosphoric acid, sulfuric acid, acetic acid, formic acid, ammonium phosphate, ammonium sulfate, ammonium acetate, ammonium formate, ammonium chloride, sodium hydroxide, and potassium hydroxide. Of those, sulfuric acid, ammonium sulfate, sodium hydroxide, and potassium hydroxide are preferred. In addition, a pH adjusting agent selected from the neutralizers described in the production method for the polymer (A) may be used.

\<Corrosion Inhibitor\>

A corrosion inhibitor may be further added to the slurry for an electrical storage device electrode according to this embodiment for the purpose of reducing the corrosion of a current collector in accordance with the kind of the active material.

Examples of the corrosion inhibitor may include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Of those, ammonium paratungstate, ammonium metavanadate, sodium metavanadate, potassium metavanadate, and ammonium molybdate are preferred.

\<Cellulose Fiber\>

A cellulose fiber may be further added to the slurry for an electrical storage device electrode according to this embodiment. A known cellulose fiber may be used as the cellulose fiber. The addition of the cellulose fiber can improve the adhesiveness of the active material with respect to a current collector in some cases. It is conceived that the fibrous cellulose fiber fibrously binds the adjacent molecules of the active material to each other by linear adhesion or linear contact, and thus can prevent the detachment of the active material and can improve the adhesiveness thereof with respect to a current collector.

2.4. Preparation Method for Slurry for Electrical Storage Device Electrode

The slurry for an electrical storage device electrode according to this embodiment may be a slurry produced by any method as long as the slurry includes the above-mentioned binder composition for an electrical storage device and active material. From the viewpoint of more efficiently and inexpensively producing a slurry having more satisfactory dispersibility and stability, the slurry is preferably produced by adding the active material and optionally added components to be used as required to the binder composition for an electrical storage device, and mixing the components. A specific example of the production method is a method described in JP 5999399 B2.

3. Electrical Storage Device Electrode

An electrical storage device electrode according to an embodiment of the present invention includes a current collector and an active material layer formed on a surface of the current collector by applying and drying the above-mentioned slurry for an electrical storage device electrode. Such electrical storage device electrode may be produced by applying the above-mentioned slurry for an electrical storage device electrode to the surface of the current collector such as metal foil to form a coating film, and then drying the coating film to form the active material layer. The thus produced electrical storage device electrode has the active material layer, which contains the above-mentioned polymer (A), active material, and optional components added as required, bound to the surface of the current collector. Accordingly, the electrical storage device electrode is brought into a satisfactory state having a small number of defects on the surface of the active material layer, and is excellent in adhesiveness and ion conductivity.

The current collector is not particularly limited as long as the current collector is formed of a conductive material, but an example thereof is a current collector described **in** JP 5999399 B2.

When the silicon material is used as the active material in the electrical storage device electrode according to this embodiment, the content ratio of a silicon element in 100 mass% of the active material layer is preferably from 1 mass% to 30 mass%, more preferably from 2 mass% to 20 mass%, particularly preferably from 3 mass% to 10 mass%. When the content ratio of the silicon element in the active material layer falls within the above-mentioned ranges, the electrical storage capacity of an electrical storage device produced by using the electrical storage device electrode is improved, and besides, an active material layer in which the distribution of the silicon element is homogeneous is obtained. The content of the silicon element in the active material layer may be measured by a method described in JP 5999399 B2, for example.

4. Electrical Storage Device

An electrical storage device according to an embodiment of the present invention includes the above-mentioned electrical storage device electrode and further includes an electrolytic solution, and may be produced in accordance with a conventional method through use of parts such as a separator. A specific example of the production method may be a method involving: stacking together a negative electrode and a positive electrode via a separator; accommodating the stack in a battery container in a state of, for example, being wound or folded in accordance with a battery shape; injecting an electrolytic solution into the battery container; and sealing the battery container. The shape of the battery may be an appropriate shape, such as a coin shape, a cylindrical shape, a square shape, or a laminate shape.

The electrolytic solution may be in a liquid form or a gel form, and an electrolytic solution effectively expressing a function as a battery only needs to be selected from known electrolytic solutions to be used for electrical storage devices in accordance with the kind of the active material. The electrolytic solution may be a solution obtained by dissolving an electrolyte in an appropriate solvent. Examples of such electrolyte and solvent include compounds described in JP 5999399 B2.

The electrical storage device according to this embodiment may be applied to, for example, a lithium ion secondary battery, an electric double layer capacitor, and a lithium ion capacitor each of which needs to be discharged at a high current density. Of those, a lithium ion secondary battery is particularly preferred. In the electrical storage device electrode and the electrical storage device according to the above-mentioned embodiments, known members for lithium ion secondary batteries, for electric double layer capacitors, and for lithium ion capacitors may be used as members other than the binder composition for an electrical storage device.

5. Examples

The present invention is specifically described below by way of Examples, but the present invention is by no means limited to these Examples. The terms "part(s)" and "%" in Examples and Comparative Examples are by mass unless otherwise stated.

5.1. Examples 1 to 22 and Comparative Examples 1 to 6

5.1.1. Preparation of Binder Composition for Electrical Storage Device

<Example 1>

A dispersion of a polymer (A1) was obtained by such one-stage polymerization as described below. 500 Parts by mass of water, a monomer mixture formed of 1 part by mass of styrene, 5 parts by mass of acrylic acid, 64 parts by mass of 2-ethylhexyl acrylate, 25 parts by mass of acrylonitrile, and 5 parts by mass of isopropylidenemalononitrile, 1 part by mass of sodium dodecylbenzenesulfonate serving as an emulsifier, and 0.3 part by mass of potassium persulfate serving as a polymerization initiator were loaded into a reaction vessel. The mixture was subjected to polymerization at a polymerization temperature of 75°C for 8 hours to provide a dispersion of the polymer (A1). The conversion rate of the polymer (A1) at this time was 99%.

Then, 1 part by mass of 2,6-di-tert-butyl-p-cresol serving as an age resistor was added thereto, and the dispersion of the polymer (A1) was dropped onto 3,000 parts by mass of a 0.5% aqueous solution of calcium chloride. The resultant aggregate was subjected to water washing, part of the resultant aggregate was dried at 80°C, and the amount of the emulsifier in the aggregate was analyzed. After that, the same operation was repeated, and at the time point when no reduction in amount of the emulsifier remaining in the aggregate was observed, all of the remaining aggregate was dried at 80°C, and fully recovered. The amount of the emulsifier in the fully recovered aggregate was 7,890 ppm with respect to 100 parts by mass of the polymer (A1). A method of measuring the amount of the emulsifier is as described below.

<Method of measuring Amount of Emulsifier>

5 g of the dried aggregate was immersed in 100 mL of ethanol at normal temperature for 1 hour, and then an extract was recovered. The extract was loaded into an aluminum dish (X (g)) whose weight had been measured in advance. The aluminum dish containing the extract was dried with a hot-air dryer so that the solvent was completely removed. The aluminum dish was taken out and left standing to cool, and then the weight (Y (g)) of the aluminum dish was measured. From the values of the weights X and Y thus measured, a solid content concentration (A) was calculated by the following equation (2).

$$A\,(\%) = ((Y - X)/5) \times 100 \cdots\cdots (2)$$

The component in the solid content concentration A is a mixture of the residual emulsifier and the age resistor, and hence the amount of the residual emulsifier was calculated by using the following equation (3).

$$\text{Amount of residual emulsifier (ppm)} = ((100 + 1) \times A\,(\%) - 1) \times 1{,}000{,}000$$

The polymer (A1) obtained above was added into N-methyl-2-pyrrolidone, and the mixture was stirred overnight to prepare a binder composition for an electrical storage device in which the polymer (A1) was dissolved in N-methyl-2-pyrrolidone. In this case, the content of the polymer (A1) was adjusted to 8 mass% when the entirety of the binder composition for an electrical storage device was defined as 100 mass%.

<Examples 2 to 22 and Comparative Examples 1 to 6>

Respective binder compositions for electrical storage devices were obtained in the same manner as in Example 1 by synthesizing the respective polymers by one-stage polymerization in the same manner as in Example 1 except that the kinds and amounts of the monomers were each changed as shown in Table 1 below to Table 3 below.

5.1.2. Physical Property Evaluation of Binder Composition for Electrical Storage Device

<Method of measuring Polymerization Conversion Rate>

The polymerization conversion rate in the synthesis of the above-mentioned respective polymers was measured as described below.

A reaction solution that had been subjected to polymerization for a predetermined period of time was sampled and loaded into an aluminum dish (X (g)) whose weight had been measured in advance, and the weight (Y (g)) of the reaction solution was measured. The aluminum dish containing the reaction solution was dried with a hot-air dryer at 155°C for 15 minutes. The aluminum dish was taken out and left standing to cool, and then the weight (Z (g)) of the aluminum dish was measured. From the values of the weights X, Y, and Z thus measured, the polymerization conversion rate (%) was calculated by the following equation (4).

$$\text{Polymerization conversion rate (\%)} = ((Z - X)/Y) \times 100 \cdots\cdots (4)$$

<Measurement of Weight Average Molecular Weight of THF-soluble Components>

10 mg of a binder composition for an electrical storage device having a solid content concentration of 20 mass% was mixed with 5 mL of THF, and the mixture was left to stand at 25°C for 16 hours and then passed through a 0.45 $\mu$m membrane filter to produce a sample for measurement. Then, under the following measurement conditions, the resultant sample for measurement was used to determine the weight average molecular weight (Mw) of the THF-soluble components in terms of polystyrene (RI detection) by gel permeation chromatography using the following column. The measurement results are shown in Table 1 below to Table 3 below.

[Measurement Conditions]

- Temperature: 35°C
- Solvent: THF
- Flow rate: 1.0 mL/min
- Concentration: 0.2 mass%
- Measurement sample injection volume: 100 $\mu$L

[Column]

- "GPC TSKgel $\alpha$-2500" (30 cm $\times$ two columns) manufactured by Tosoh Corporation was used. (Measurement was performed under such a condition that a linear correlation equation between $\text{Log}_{10}$(Mw) and elution time was 0.98 or more between a Mw of 1,000 and a Mw of 20,000,000.)

<Evaluation of NMP Solubility>

The polymer dispersion obtained above was added to an aqueous solution of calcium chloride, and the resultant was subjected to the water washing step and the drying step to provide a solidified polymer. The resultant polymer was diluted by adding N-methyl-2-pyrrolidone so that its concentration became 1 mass%. The transparency at 1 atm and 23°C of the 1 mass% NMP solution of the polymer thus obtained was visually observed. The results are shown in Table 1 below to Table 3 below. A case in which the 1 mass% NMP solution of the polymer was transparent was judged to be "dissolved" and represented as "A", and a case in which the 1 mass% NMP solution of the polymer was translucent or cloudy was judged to be "not dissolved" and represented as "B".

5.1.3. Preparation of Slurry for Positive Electrode of Lithium Ion Secondary Battery

37.5 Parts by mass (value in terms of solid content: 8%, corresponding to 3 parts by mass of the polymer obtained above) of the binder composition for an electrical storage device obtained by dissolving the polymer (A) in NMP, 100 parts by mass of NMC 622 (product name: "ME-8A", manufactured by Beijing Dangsheng Material Technology Co., Ltd.) serving as a positive electrode active material, 5 parts by mass of acetylene black, and 74 parts by mass of NMP were loaded into a twin-screw planetary mixer (manufactured by PRIMIX Corporation, product name: "T.K. HIVIS MIX 2P-03") to prepare a slurry having a solid content concentration of about 50%, and the slurry was stirred at 60 rpm for 1 hour.

After that, the slurry was stirred for 1 hour to provide a paste, and then the materials were mixed by stirring with a stirring deaerator (manufactured by Thinky Corporation, product name: "AWATORI RENTARO") at 200 rpm for 2 minutes, at 1,800 rpm for 5 minutes, and in a vacuum (about $5.0 \times 10^3$ Pa) at 1,800 rpm for 1.5 minutes. Thus, a slurry for a positive electrode of a lithium ion secondary battery was prepared.

5.1.4. Production of Positive Electrode for Lithium Ion Secondary Battery and Evaluations of its Physical Properties

<Production of Positive Electrode for Lithium Ion Secondary Battery>

The slurry for a positive electrode of a lithium ion secondary battery obtained above was uniformly applied to the surface of a current collector formed of aluminum foil having a thickness of 20 μm by a doctor blade method so that its thickness after drying became 100 μm, followed by drying at 120°C for 20 minutes. After that, press working was performed with a roll pressing machine so that the density of the formed film (positive electrode active material layer) became 3.0 g/cm³. Thus, a positive electrode for a lithium ion secondary battery was obtained.

<Evaluation of State of Electrode>

The positive electrode for a lithium ion secondary battery obtained above was cut into a size of 10 cm × 10 cm, the number of marks caused by bubble collapse on a surface thereof was visually counted. The evaluation criteria are as described below. The evaluation results are shown in Table 1 below to Table 3 below. When the active material layer has no particle marks, coating defects caused by the residual emulsifier are reduced, and hence a satisfactory cycle characteristic is exhibited.

(Evaluation Criteria)

- Score of 5: When the number of particle marks caused by bubble collapse is 0, no coating defects are caused by the residual emulsifier, and hence the state of the electrode is satisfactory.
- Score of 4: When the number of particle marks caused by bubble collapse is 1 or more and 5 or less, substantially no coating defects are caused by the residual emulsifier, and hence the state of the electrode is satisfactory.
- Score of 3: When the number of particle marks caused by bubble collapse is 6 or more and 10 or less, few coating defects are caused by the residual emulsifier, and hence the state of the electrode is satisfactory.
- Score of 2: When the number of particle marks caused by bubble collapse is 11 or more and 15 or less, slight coating defects are caused by the residual emulsifier, and hence the electrode is hardly used.
- Score of 1: When the number of particle marks caused by bubble collapse is 16 or more, a large number of coating defects are caused by the residual emulsifier, and hence the electrode is unable to be used.

<Evaluation of Adhesive Strength>

In the surface of the positive electrode for a lithium ion secondary battery obtained above, ten cuts each having a depth extending from the active material layer to the current collector were made with a knife at intervals of 2 mm in each of longitudinal and latitudinal directions, to thereby make cuts in a grid shape. A pressure-sensitive adhesive tape having a width of 18 mm (manufactured by Nichiban Co., Ltd., product name: "Cellotape" (trademark), specified in JIS Z1522:2009) was attached to the cuts and immediately peeled off, and the degree of detachment of the active material was evaluated by visual judgment. Evaluation criteria are as described below. The evaluation results are shown in Table 1 below to Table 3 below.

(Evaluation Criteria)

- Score of 5: The number of detached pieces of the active material layer is 0.
- Score of 4: The number of detached pieces of the active material layer is from 1 to 5.
- Score of 3: The number of detached pieces of the active material layer is from 6 to 20.
- Score of 2: The number of detached pieces of the active material layer is from 21 to 40.
- Score of 1: The number of detached pieces of the active material layer is 41 or more.

5.1.5. Production of Lithium Ion Secondary Battery and Evaluations of its Physical Properties

<Preparation of Slurry for Negative Electrode of Lithium Ion Secondary Battery>

1 Part by mass (in terms of solid content) of a thickener (product name: "CMC-2200", manufactured by Daicel Corporation), 100 parts by mass (in terms of solid content) of graphite serving as a negative electrode active material, and 68 parts by mass of water were loaded into a twin-screw planetary mixer (manufactured by PRIMIX Corporation, product name: "T.K. HIVIS MIX 2P-03"), and were stirred at 60 rpm for 1 hour.
Next, a SBR (product name: "TRD105A", manufactured by ENEOS Materials Corporation) was added in an amount corresponding to 2 parts by mass (in terms of solid content) to the mixture, and the whole was further stirred for 1 hour to provide a paste. Water was loaded into the resultant paste to adjust its solid content concentration to 50%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum at 1,800 rpm for 1.5 minutes. Thus, a slurry for a negative electrode of a lithium ion secondary battery was prepared.

<Production of Negative Electrode for Lithium Ion Secondary Battery>

The slurry for a negative electrode of a lithium ion secondary battery prepared above was uniformly applied to the surface of a current collector formed of copper foil having a thickness of 20 $\mu$m by a doctor blade method so that its thickness after drying became 80 $\mu$m, followed by drying treatment at 120°C for 20 minutes. After that, press working was performed with a roll pressing machine so that the density of the formed film (negative electrode active material layer) became 1.9 g/cm$^3$. Thus, a negative electrode for a lithium ion secondary battery was obtained.

<Assembly of Lithium Ion Secondary Battery>

In a glove box in which Ar purging had been performed so that a dew point was -80°C or less, the negative electrode for a lithium ion secondary battery produced above that had been punch-molded into a circular shape having a diameter of 16.16 mm was mounted on a bipolar coin cell (manufactured by Hohsen Corp., product name: "HS Flat Cell"). Next, a separator (manufactured by Celgard LLC, product name: "CELGARD #2400") formed of a polypropylene-made porous membrane punched into a circular shape having a diameter of 24 mm was superimposed and mounted on the negative electrode for a lithium ion secondary battery. Further, 500 $\mu$L of an electrolytic solution was injected into the laminate so that air did not enter. After that, the positive electrode for a lithium ion secondary battery produced above that had been punch-molded into a circular shape having a diameter of 15.95 mm was superimposed and mounted on the separator, and the exterior body of the bipolar coin cell was sealed by tightening its screws. Thus, a lithium ion secondary battery was assembled. The electrolytic solution used here is a solution obtained by dissolving LiPF$_6$ at a concentration of 1 mol/L in a solvent containing ethylene carbonate and ethyl methyl carbonate at 1/1 (mass ratio).

<Evaluation of Resistance Increase Rate>

For the lithium ion secondary battery produced above, in a thermostat controlled to a temperature of 25°C, charge was started at a constant current (1.0C). At the time point when the voltage reached 4.25 V, the charge was subsequently continued at a constant voltage (4.25 V). The time point when the current value reached 0.01C was defined as charge completion (cut-off). After that, discharge was started at a constant current (0.05C). The time point when the voltage reached 2.5 V was defined as discharge completion (cut-off), and a discharge capacity in the 0$^{th}$ cycle was calculated.

Further, charge was started at a constant current (1.0C). At the time point when the voltage reached 4.25 V, the charge was subsequently continued at a constant voltage (4.25 V). The time point when the current value reached 0.01C was defined as charge completion (cut-off). After that, discharge was started at a constant current (1.0C). The time point when the voltage reached 2.5 V was defined as discharge completion (cut-off), and a discharge capacity in the $1^{st}$ cycle was calculated. In this manner, charge and discharge were repeated 100 times. After charge and discharge had been repeated 100 times, charge and discharge were performed in the same manner as in the $0^{th}$ cycle, and a discharge capacity in the $101^{st}$ cycle was evaluated. A resistance increase rate was calculated by the following equation (5) and evaluated by the following criteria. The results are shown in Table 1 below to Table 3 below.

Resistance increase rate (%) = (discharge capacity in $101^{st}$ cycle - discharge capacity in $100^{th}$ cycle)/(discharge capacity in $0^{th}$ cycle - discharge capacity in $1^{st}$ cycle) $\times$ 100          (5)

(Evaluation Criteria)

- Score of 5: The resistance increase rate is 100% or more and less than 110%.
- Score of 4: The resistance increase rate is 110% or more and less than 120%.
- Score of 3: The resistance increase rate is 120% or more and less than 130%.
- Score of 2: The resistance increase rate is 130% or more and less than 140%.
- Score of 1: The resistance increase rate is 140% or more and less than 150%.
- Score of 0: The resistance increase rate is 150% or more.

<Evaluation of Cycle Characteristic>

For the lithium ion secondary battery produced above, in a thermostat controlled to a temperature of 25°C, charge was started at a constant current (1.0C). At the time point when the voltage reached 4.25 V, the charge was subsequently continued at a constant voltage (4.25 V). The time point when the current value reached 0.01C was defined as charge completion (cut-off). After that, discharge was started at a constant current (1.0C). The time point when the voltage reached 2.5 V was defined as discharge completion (cut-off), and a discharge capacity in the $1^{st}$ cycle was calculated. In this manner, charge and discharge were repeated 100 times. A capacity retention ratio was calculated by the following equation (6) and evaluated by the following criteria. The results are shown in Table 1 below to Table 3 below.

Capacity retention ratio (%) = (discharge capacity in $100^{th}$ cycle)/(discharge capacity in $1^{st}$ cycle)          (6)

(Evaluation Criteria)

- Score of 5: The capacity retention ratio is 95% or more.
- Score of 4: The capacity retention ratio is 90% or more and less than 95%.
- Score of 3: The capacity retention ratio is 85% or more and less than 90%.
- Score of 2: The capacity retention ratio is 80% or more and less than 85%.
- Score of 1: The capacity retention ratio is 75% or more and less than 80%.
- Score of 0: The capacity retention ratio is less than 75%.

5.2. Examples 23 to 27 and Comparative Examples 7 to 9

In Example 23, the same evaluation as that of Example 6 was performed except that: 12.5 parts by mass (value in terms of solid content: 8 mass%, corresponding to 1 part by mass of the polymer (A6) obtained above) of the binder composition for an electrical storage device including the polymer (A6) synthesized in Example 6 was used as a positive electrode binder; and NMP was added while being adjusted so that the solid content concentration of the slurry for a positive electrode of a lithium ion secondary battery became 70%. In addition, also in each of Examples 24 to 27, the same evaluation as that of Example 6 was performed except that the binder composition for an electrical storage device was used so that the number of parts by mass shown in Table 4 below was achieved.

In Comparative Example 7, the same evaluation as that of Comparative Example 6 was performed except that: 12.5 parts by mass (value in terms of solid content: 8 mass%, corresponding to 1 part by mass of the polymer (B6) obtained above) of the binder composition for an electrical storage device including the polymer (B6) synthesized in Comparative Example 6 was used as a positive electrode binder; and NMP was used while being adjusted so that the solid content concentration of the slurry for a positive electrode of a lithium ion secondary battery became 70%. In each of Comparative Examples 7 to 9, the same evaluation as that of Comparative Example 6 was performed except that the binder composition for an electrical storage device was used so that the number of parts by mass as shown in the table was achieved.

5.3. Examples 28 to 34

In each of Examples 28 to 34, the same evaluation as that of Example 6 was performed except that: the polymer (A6) synthesized in Example 6 was dissolved in the liquid medium (C) shown in Table 5 below; and the same liquid medium (C) was used even at the time of the preparation of the slurry for a positive electrode of a lithium ion secondary battery.

5.4. Evaluation Results of Examples and Comparative Examples

The polymer compositions used in Examples 1 to 22 and Comparative Examples 1 to 6, the measurement results of the respective physical properties, and the respective evaluation results are shown in Table 1 below to Table 3 below. The kinds of the polymers used in Examples 23 to 27 and Comparative Examples 7 to 9, and the respective evaluation results are shown in Table 4 below. The kinds of the liquid mediums used in Examples 28 to 34, and the respective evaluation results are shown in Table 5 below. The numerical values representing the polymer compositions shown in Table 1 below to Table 3 below each represent parts by mass.

[Table 1]

| Polymer composition | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Classification | Compound name | Monomer name | Polymer (A1) | Polymer (A2) | Polymer (A3) | Polymer (A4) | Polymer (A5) | Polymer (A6) | Polymer (A7) | Polymer (A8) | Polymer (A9) | Polymer (A10) | Polymer (A11) |
| (a1) | Aromatic vinyl compound | ST | 1 | 50 | 24 | 10 | 44 | 15 | 25 | 30 | 42 | 30 | 37 |
| (a2) | Unsaturated carboxylic acid ester | MMA | | | 5 | | 10 | | | | 20 | 10 | 15 |
| | | TADB | | | | 5 | | | | 3 | | | |
| | | TADM | | | 5 | | 5 | | | | | | |
| | | TADE | | | | | | | | | | | 1.9 |
| | | BA | | 22 | | 5 | 5 | 40 | | 2 | 15 | | 5 |
| | | 2EHA | 64 | 15 | 55 | 29.9 | | 35 | 50 | 28 | | 19 | |
| | | HEMA | | | | | | | | | 2 | | 5 |
| | | CHMA | | | | 10 | | | | 5 | 5 | | 4 |
| (a3) | Unsaturated carboxylic acid | TA | | 0.9 | | | | 1 | | | 1 | | |
| | | TAMB | | | | | 2 | | | | | | |
| | | TAMM | | | 1 | | | | | | | 1 | |
| | | TAME | | | | 0.1 | | | | | | | |
| | | AA | 5 | 2 | 2 | | | 2 | | 1 | | | |
| | | MAA | | | 4 | | 2 | | 1 | | | | 2 |
| (a4) | α,β-Unsaturated nitrile compound | AN | 25 | 10 | 1 | 40 | 24 | 6 | 19 | 10 | | | 5 |
| | | DMP | 5 | | | | 3 | | | 15 | | 20 | |
| | | FN | | | | | | | | 5 | 10 | | 20 |
| | | TCE | | | | | 3 | | 5 | | | 10 | |

|  |  |  |  |  |  |  |  |  |  |  |  |  |  |
|---|---|---|---|---|---|---|---|---|---|---|---|---|---|
| (a5) | Compound having sulfonic acid group | NaSS |  |  | 2 |  | 2 |  |  | 1 |  | 10 | 0.1 |
|  |  | VS |  |  | 1 |  |  |  |  |  |  | 5 |  |
| (a6) | (Meth)acrylamide | AAM |  | 0.1 |  |  |  | 1 |  |  |  |  |  |
|  |  | MAM |  |  |  |  |  |  |  |  |  |  | 5 |
| Emuls ifier | Sulfonic acid-based emulsifier | Sodium alkanesulfonate |  |  |  | 2 | 1 |  |  |  |  |  | 3 |
|  |  | Sodium alkyl diphenyl ether disulfonate |  | 2 | 2 | 2 |  |  |  |  |  | 0.5 |  |
|  |  | Sodium dodecylbenzenesulfonate | 1 |  | 2 |  |  | 2 |  | 0.5 |  |  | 3 |
|  |  | Sodium dialkylsulfosuccinate |  |  |  |  |  | 1 | 2 |  | 4 |  | 3 |
|  | Carboxylic acid-based emulsifier | Sodium soap of partially hydrogenated tallow fatty acid |  |  |  |  | 2 |  | 1 |  | 2 |  |  |
|  |  | Potassium rosinate |  |  |  |  | 2 |  |  |  |  |  |  |
| Number of parts of composition | (a1) Aromatic vinyl compound |  | 1 | 50 | 24 | 10 | 44 | 15 | 25 | 30 | 42 | 30 | 37 |
|  | (a2) Unsaturated carboxylic acid ester |  | 64 | 37 | 65 | 49.9 | 20 | 75 | 50 | 38 | 42 | 29 | 30.9 |
|  | (a3) Unsaturated carboxylic acid |  | 5 | 2.9 | 7 | 0.1 | 4 | 3 | 1 | 1 | 1 | 1 | 2 |
|  | Amount of emulsifier |  | 1 | 2 | 4 | 4 | 5 | 3 | 3 | 0.5 | 6 | 0.5 | 9 |
|  | Total of monomers (parts by mass) |  | 100 | 100 | 100 | 100 | 100 | 100 | 100 | 100 | 100 | 100 | 100 |
| Physi cal prope rties | Amount of residual emulsifier (ppm) |  | 7890 | 17530 | 8860 | 24120 | 12030 | 19570 | 29790 | 30 | 680 | 10320 | 8790 |
|  | NMP solubility |  | A | A | A | A | A | A | A | A | A | A | A |
| Evaluation results | State of electrode |  | 5 | 4 | 5 | 4 | 5 | 4 | 4 | 5 | 4 | 4 | 3 |
|  | Adhesive strength |  | 4 | 5 | 5 | 5 | 4 | 4 | 4 | 5 | 4 | 5 | 3 |
|  | Resistance increase rate |  | 5 | 5 | 4 | 5 | 4 | 5 | 5 | 4 | 5 | 4 | 4 |
|  | Cycle characteristics |  | 4 | 4 | 4 | 4 | 5 | 5 | 5 | 5 | 5 | 5 | 4 |

[Table 2]

| Polymer composition | | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|
| Classification | Compound name | Monomer name | Polymer (A12) | Polymer (A13) | Polymer (A14) | Polymer (A15) | Polymer (A16) | Polymer (A17) | Polymer (A18) | Polymer (A19) | Polymer (A20) | Polymer (A21) | Polymer (A22) |
| (a1) | Aromatic vinyl compound | ST | 35 | 45 | 30 | 25 | 25 | 30 |  | 15 |  |  | 5 |
|  |  | VT |  |  |  |  |  |  | 25 | 15 | 35 | 20 |  |
| (a2) | Unsaturated carboxylic acid ester | MMA |  | 4 | 64 |  |  |  |  |  |  | 4 |  |
|  |  | TADB |  |  |  |  | 20 |  |  | 2 |  |  |  |
|  |  | TADM |  |  |  |  |  | 5 |  | 2 |  |  |  |
|  |  | TADE |  |  |  |  | 10 |  |  | 2 |  |  |  |
|  |  | BA |  |  |  |  | 5 | 20 | 20 | 25 | 40 |  | 20 |
|  |  | 2EHA | 20 | 30 |  | 21 |  | 20 | 40 | 25 |  | 55 | 33 |
|  |  | HEMA |  | 6 |  |  |  |  | 1 | 1 |  |  |  |
|  |  | CHMA | 5 |  |  |  |  |  |  | 2 |  |  |  |
| (a3) | Unsaturated carboxylic acid | TA | 1 | 3 |  | 4 |  |  |  |  |  |  | 1 |
|  |  | TAMB |  |  | 1 |  |  |  |  | 1 |  |  |  |
|  |  | TAMM |  | 2 |  |  |  |  |  | 1 |  |  |  |
|  |  | TAME |  |  | 1 |  |  |  |  | 1 |  |  |  |
|  |  | AA |  |  | 4 |  |  |  |  | 1 |  |  |  |
|  |  | MAA |  | 1 |  |  |  |  |  |  |  |  | 1 |
| (a4) | α,β-Unsaturated nitrile compound | AN | 30 | 5 |  | 20 | 30 | 25 | 10 |  | 15 |  |  |
|  |  | DMP | 5 |  |  |  |  |  |  | 3 |  |  |  |
|  |  | FN |  |  |  | 20 |  |  |  | 3 |  |  |  |

[Table 2 (continued)]

| | | | | | | | | | | | | | |
|---|---|---|---|---|---|---|---|---|---|---|---|---|---|
| | | TCE | | | | 10 | | | | 3 | | | |
| (a5) | Compound having sulfonic acid group | NaSS | 2 | 4 | | | | | | | | 1 | |
| | | VS | 2 | | | | | | | | 5 | | |
| (a6) | (Meth)acrylamide | AAM | | | | 5 | | | 1 | | | | |
| | | MAM | | | | 5 | | | 1 | | | | |
| (a7) | Vinylpyrrolidone | VP | | | | | | | | | 5 | 20 | 40 |
| Emulsifier | Sulfonic acid-based emulsifier | Sodium alkanesulfonate | 0.2 | | | | | 0.5 | 0.3 | | | | |
| | | Sodium alkyl diphenyl ether disulfonate | | | | 1 | | | | 1 | | 2 | 0.5 |
| | | Sodium dodecylbenzenesulfonate | | | | | 5 | | | | | | 2 |
| | | Sodium dialkylsulfosuccinate | | | 2 | | | | | | 1.5 | | 2 |
| | Carboxylic acid-based emulsifier | Sodium soap of partially hydrogenated tallow fatty acid | | | | | | | | | | | |
| | | Potassium rosinate | | 0.5 | | 2 | | | | | | 1 | 0.5 |
| Number of parts of composition | | (a1) Aromatic vinyl compound | 35 | 45 | 30 | 25 | 25 | 30 | 25 | 30 | 35 | 20 | 5 |
| | | (a2) Unsaturated carboxylic acid ester | 25 | 40 | 64 | 21 | 35 | 45 | 61 | 59 | 40 | 59 | 53 |
| | | (a3) Unsaturated carboxylic acid | 1 | 6 | 6 | 4 | 0 | 0 | 4 | 0 | 0 | 0 | 2 |
| | | Amount of emulsifier | 0.2 | 0.5 | 2 | 3 | 5 | 0.5 | 0.3 | 1 | 1.5 | 3 | 5 |
| | | Total of monomers (parts by mass) | 100 | 100 | 100 | 100 | 100 | 100 | 100 | 100 | 100 | 100 | 100 |
| Physical properties | | Amount of residual emulsifier (ppm) | 3050 | 8840 | 2840 | 22330 | 25800 | 3320 | 3980 | 10020 | 2270 | 19820 | 24910 |
| | | NMP solubility | A | B | A | A | B | A | A | A | A | A | A |
| Evaluation results | | State of electrode | 3 | 3 | 5 | 3 | 3 | 4 | 5 | 4 | 5 | 5 | 5 |
| | | Adhesive strength | 4 | 3 | 4 | 3 | 5 | 3 | 5 | 5 | 4 | 5 | 4 |
| | | Resistance increase rate | 3 | 4 | 3 | 4 | 3 | 4 | 4 | 4 | 4 | 5 | 5 |
| | | Cycle characteristics | 4 | 3 | 3 | 3 | 5 | 3 | 4 | 5 | 4 | 5 | 5 |

[Table 3]

| Polymer composition | | | Comparative Example 1 | Comparative Example 2 | Comparative Example 3 | Comparative Example 4 | Comparative Example 5 | Comparative Example 6 |
|---|---|---|---|---|---|---|---|---|
| Classification | Compound name | Monomer name | Polymer (B1) | Polymer (B2) | Polymer (B3) | Polymer (B4) | Polymer (B5) | Polymer (B6) |
| (a1) | Aromatic vinyl compound | ST | 60 | 0 | 20 | 35 | 40 | 10 |
| (a2) | Unsaturated carboxylic acid ester | MMA | 20 | | | 10 | 5 | 30 |
| | | TADB | | | | | | |
| | | TADM | | | | | | |
| | | TADE | | | | | | |
| | | BA | | 30 | 25 | 10 | | 30 |
| | | 2EHA | 12 | 40 | | 10 | | 25 |
| | | HEMA | | | | | | |
| | | CHMA | | | 25 | 10 | 10 | |
| (a3) | Unsaturated carboxylic acid | TA | 1 | | 7 | 1 | | 1 |
| | | TAMB | | | | 1 | | |
| | | TAMM | | | | 1 | | |
| | | TAME | | | | 1 | | |
| | | AA | | | 5 | 1 | 3 | |
| | | MAA | | 2 | | | 2 | |
| (a4) | α,β-Unsaturated nitrile compound | AN | 7 | 18 | 18 | 5 | 30 | 4 |
| | | DMP | | | | | 10 | |
| | | FN | | | | 10 | | |
| | | TCE | | 10 | | | | |

| | | | | | | | | |
|---|---|---|---|---|---|---|---|---|
| (a5) | Compound having sulfonic acid group | NaSS | | | | 5 | | |
| | | VS | | | | | | |
| (a6) | (Meth)acrylamide | AAM | | | | | | |
| | | MAM | | | | | | |
| Emulsifier | Sulfonic acid-based emulsifier | Sodium alkanesulfonate | 2 | | | | | |
| | | Sodium alkyl diphenyl ether disulfonate | | 2 | | | | 2 |
| | | Sodium dodecylbenzenesulfonate | | | 2 | | 2 | |
| | | Sodium dialkylsulfosuccinate | | 1 | | | | |
| | Carboxylic acid-based emulsifier | Sodium soap of partially hydrogenated tallow fatty acid | | | | 6 | | |
| | | Potassium rosinate | | | | | | |
| Number of parts of composition | | (a1) Aromatic vinyl compound | 60 | 0 | 20 | 35 | 40 | 10 |
| | | (a2) Unsaturated carboxylic acid ester | 32 | 70 | 50 | 40 | 15 | 85 |
| | | (a3) Unsaturated carboxylic acid | 1 | 2 | 12 | 5 | 5 | 1 |
| | | Amount of emulsifier | 2 | 3 | 2 | 6 | 2 | 2 |
| | | Total of monomers (parts by mass) | 100 | 100 | 100 | 100 | 100 | 100 |
| Physical properties | | Amount of residual emulsifier (ppm) | 130 | 15060 | 26 | 40440 | 17050 | 340 |
| | | NMP solubility | A | A | A | A | A | A |
| Evaluation results | | State of electrode | 5 | 4 | 5 | 1 | 4 | 5 |
| | | Adhesive strength | 2 | 2 | 5 | 2 | 1 | 2 |
| | | Resistance increase rate | 3 | 3 | 1 | 1 | 1 | 1 |
| | | Cycle characteristics | 2 | 1 | 2 | 1 | 1 | 2 |

[Table 4]

| Composition of slurry for positive electrode of lithium ion secondary battery | | Example 6 | Example 23 | Example 24 | Example 25 | Example 26 | Example 27 | Comparative Example 6 | Comparative Example 7 | Comparative Example 8 | Comparative Example 9 |
|---|---|---|---|---|---|---|---|---|---|---|---|
| Polymer (A6) synthesized in Example 6 | | 3 | 1 | 6 | 1.5 | 3 | 3 | | | | |
| Polymer (B6) synthesized in Comparative Example 6 | | | | | | | | 3 | 1 | 6 | 1.5 |
| PVdF | | | | | 1.5 | 1.5 | 3 | | | | 1.5 |
| Evaluation results | State of electrode | 4 | 5 | 4 | 5 | 4 | 4 | 5 | 5 | 4 | 5 |
| | Adhesive strength | 4 | 3 | 5 | 4 | 5 | 5 | 2 | 1 | 3 | 2 |
| | Resistance increase rate | 5 | 5 | 4 | 5 | 4 | 4 | 1 | 1 | 1 | 2 |
| | Cycle characteristics | 5 | 4 | 5 | 5 | 5 | 5 | 2 | 1 | 2 | 2 |

[Table 5]

| Composition of slurry for positive electrode of lithium ion secondary battery | | Example 6 | Example 28 | Example 29 | Example 30 | Example 31 | Example 32 | Example 33 | Example 34 |
|---|---|---|---|---|---|---|---|---|---|
| Polymer (A6) synthesized in Example 6 | | 3 | 3 | 3 | 3 | 3 | 3 | 3 | 3 |
| Liquid medium (C) | | NMP | γ-Butyrolactone | Methylaceta mide | Dimethylformamide | Methyl hexyl ketone | Triethylene glycol dimethyl ether | Butyl acetate | Anisole |
| Evaluation results | State of electrode | 4 | 4 | 4 | 5 | 4 | 4 | 5 | 4 |
| | Adhesive strength | 4 | 5 | 4 | 4 | 5 | 4 | 5 | 4 |
| | Resistance increase rate | 5 | 4 | 5 | 4 | 5 | 5 | 4 | 5 |
| | Cycle characteristics | 5 | 5 | 5 | 5 | 4 | 5 | 4 | 5 |

25

The numbers of polymers synthesized in the respective examples are shown in the rows below the Example numbers and Comparative Example numbers in Table 1 above to Table 3 above. The monomers, the emulsifiers, and the polymers in Table 1 above to Table 4 above represent the following compounds, respectively.

<Monomer>

(Aromatic Vinyl Compound)

- ST: styrene
- VT: vinyltoluene

(Unsaturated Carboxylic Acid Ester)

- MMA: methyl methacrylate
- TADB: dibutyl itaconate
- TADM: dimethyl itaconate
- TADE: diethyl itaconate
- BA: butyl acrylate
- 2EHA: 2-ethylhexyl acrylate
- HEMA: hydroxyethyl methacrylate
- CHMA: cyclohexyl methacrylate

(Unsaturated Carboxylic Acid)

- TA: itaconic acid
- TAMB: monobutyl itaconate
- TAMM: monomethyl itaconate
- TAME: monoethyl itaconate
- AA: acrylic acid
- MAA: methacrylic acid

($\alpha,\beta$-Unsaturated nitrile compound)

- AN: acrylonitrile
- DMP: isopropylidenemalononitrile
- FN: fumaronitrile
- TCE: tetracyanoethylene

(Sulfonic Acid)

- NaSS: sodium styrenesulfonate
- VS: vinyl sulfonic acid

((Meth)acrylamide)

- AAM: acrylamide
- MAM: methacrylamide

(Vinylpyrrolidone)

- VP: N-vinyl-2-pyrrolidone

<Emulsifier>

(Sulfonic Acid-based Emulsifier)

- Sodium alkanesulfonate: product name: "LATEMUL PS", manufactured by Kao Corporation
- Sodium alkyl diphenyl ether disulfonate: product name: "PELEX SS-L", manufactured by Kao Corporation
- Sodium dodecylbenzenesulfonate: product name: "NEOPELEX G-65", manufactured by Kao Corporation
- Sodium dialkylsulfosuccinate: product name: "PELEX TR", manufactured by Kao Corporation

(Carboxylic Acid-based Emulsifier)

- Sodium soap of partially hydrogenated tallow fatty acid: product name: "NS SOAP", manufactured by Kao Corporation
- Potassium rosinate: product name: "DIPROSIN A-100", manufactured by TOHO Chemical Industry Co., Ltd.

<Polymer>

- PVdF: product name: "HSV900", manufactured by Arkema, polyvinylidene fluoride

In each of Example 1 to Example 22, a slurry obtained by incorporating the binder composition for an electrical storage device of the present invention and the active material is used as each of the slurries for electrodes of lithium ion secondary batteries. As a result, it was recognized that the active material layer formed from the slurry had a satisfactory surface state, and a sufficient binding property was obtained for the binder with no occurrence of the detachment of the active material, cracks, or the like due to the embrittlement of the active material layer itself at the time of the measurement of peel strength. In addition, it was recognized that an increase in internal resistance in the resultant lithium ion secondary battery was reduced, and besides, the cycle characteristic was improved. Accordingly, it was found that, when the binder composition for an electrical storage device of the present Invention was used, an electrode for a lithium ion secondary battery excellent in surface state, adhesiveness, and ion conductivity was able to be produced, and the cycle characteristic of a lithium ion secondary battery was able to be improved. In addition, according to Examples 23 to Example 34, it was found that the above-mentioned effects were exhibited even when the amounts of the binders or the kinds thereof, or the kinds of the liquid mediums were changed.

The present invention is not limited to the embodiments described above, and various modifications may be made thereto. The present invention encompasses substantially the same configurations as the configurations described in the embodiments (e.g., configurations having the same functions, methods, and results, or configurations having the same objects and effects). The present invention also encompasses configurations obtained by replacing non-essential elements of the configurations described in the embodiments with other elements. The present invention also encompasses configurations exhibiting the same operations and effects or configurations capable of achieving the same objects as those of the configurations described in the embodiments. The present invention also encompasses configurations obtained by adding known art to the configurations described in the embodiments.

## Claims

1. A binder composition for an electrical storage device, the binder composition comprising:

    a polymer (A); and
    30 ppm to 30,000 ppm of an emulsifier (B) with respect to a total mass of the polymer (A),
    wherein when a total of repeating units in the polymer (A) is defined as 100 mass%, the polymer (A) contains
    1 mass% to 50 mass% of a repeating unit (a1) derived from an aromatic vinyl compound, and
    20 mass% to 75 mass% of a repeating unit (a2) derived from an unsaturated carboxylic acid ester.

2. The binder composition for an electrical storage device according to claim 1, wherein the polymer (A) further contains 0.5 mass% to 10 mass% of a repeating unit (a3) derived from an unsaturated carboxylic acid.

3. The binder composition for an electrical storage device according to claim 1 or 2, wherein the polymer (A) further contains 5 mass% to 40 mass% of a repeating unit (a4) derived from an $\alpha,\beta$-unsaturated nitrile compound.

4. The binder composition for an electrical storage device according to claim 1 or 2, wherein the polymer (A) further contains 0.1 mass% to 10 mass% of a repeating unit (a5) derived from a compound having a sulfonic acid group.

5. The binder composition for an electrical storage device according to claim 1 or 2, wherein the polymer (A) further contains 0.1 mass% to 10 mass% of a repeating unit (a6) derived from (meth)acrylamide.

6. The binder composition for an electrical storage device according to claim 1 or 2, wherein the polymer (A) further contains 5 mass% to 40 mass% of a repeating unit (a7) derived from vinylpyrrolidone.

7. The binder composition for an electrical storage device according to claim 1 or 2, wherein a solubility of the polymer (A) in N-methyl-2-pyrrolidone at 25°C and 1 atm is 1 g or more per 100 g of N-methyl-2-pyrrolidone.

8. The binder composition for an electrical storage device according to claim 1 or 2, wherein the emulsifier (B) is an anionic surfactant.

9. The binder composition for an electrical storage device according to claim 1 or 2, further comprising a liquid medium (C) that is at least one kind selected from a group consisting of an aliphatic hydrocarbon, an alicyclic hydrocarbon, an aromatic hydrocarbon, ketones, esters, ethers, glycol ethers, lactams, lactones, and amides.

10. A slurry for an electrical storage device electrode, the slurry comprising:

the binder composition for an electrical storage device of claim 1 or 2; and
an active material.

11. The slurry for an electrical storage device electrode according to claim 10, wherein the active material is a positive electrode active material.

12. An electrical storage device electrode comprising:

a current collector; and
an active material layer formed on a surface of the current collector by applying and drying the slurry for an electrical storage device electrode of claim 10.

13. An electrical storage device comprising the electrical storage device electrode of claim 12.

## INTERNATIONAL SEARCH REPORT

| | |
|---|---|
| International application No. | **PCT/JP2024/004088** |

### A.  CLASSIFICATION OF SUBJECT MATTER

*H01M 4/62*(2006.01)i; *C08F 212/10*(2006.01)i; *C08F 220/18*(2006.01)i; *H01G 11/38*(2013.01)i; *H01M 4/13*(2010.01)i; *H01M 4/139*(2010.01)i

FI:    H01M4/62 Z; H01M4/13; H01M4/139; H01G11/38; C08F220/18; C08F212/10

According to International Patent Classification (IPC) or to both national classification and IPC

### B.  FIELDS SEARCHED

Minimum documentation searched (classification system followed by classification symbols)

H01M4/62; C08F212/10; C08F220/18; H01G11/38; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X | JP 2013-187188 A (CONVERTEK INC) 19 September 2013 (2013-09-19) claim 1, paragraphs [0074], [0075], [0082], [0100], [0188], [0191]-[0205] | 1-3 , 8-13 |
| A | | 4-7 |
| A | WO 2017/221572 A1 (ZEON CORPORATION) 28 December 2017 (2017-12-28) example 1 | 1-13 |
| A | JP 2020-516021 A (LG CHEM, LTD.) 28 May 2020 (2020-05-28) claims | 1-13 |
| A | WO 2015/098008 A1 (ZEON CORPORATION) 02 July 2015 (2015-07-02) claims | 1-13 |
| A | JP 2017-084589 A (ZEON CORPORATION) 18 May 2017 (2017-05-18) claims | 1-13 |

☐ Further documents are listed in the continuation of Box C.      ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/004088** |

| Patent document cited in search report | | | Publication date (day/month/year) | Patent family member(s) | | | Publication date (day/month/year) |
| --- | --- | --- | --- | --- | --- | --- | --- |
| JP | 2013-187188 | A | 19 September 2013 | TW | 201338622 | A | |
| | | | | CN | 103298194 | A | |
| WO | 2017/221572 | A1 | 28 December 2017 | US | 2019/0221807 | A1 | |
| | | | | example 1 | | | |
| | | | | EP | 3474348 | A1 | |
| | | | | CN | 109314209 | A | |
| | | | | KR | 10-2019-0018634 | A | |
| JP | 2020-516021 | A | 28 May 2020 | US | 2020/0194792 | A1 | |
| | | | | claims | | | |
| | | | | EP | 3565041 | A1 | |
| | | | | CN | 110226253 | A | |
| | | | | KR | 10-1970648 | B1 | |
| WO | 2015/098008 | A1 | 02 July 2015 | CN | 105794028 | A | |
| | | | | claims | | | |
| | | | | KR | 10-2016-0102397 | A | |
| | | | | CN | 110061187 | A | |
| JP | 2017-084589 | A | 18 May 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10298386 A
- JP 2019194944 A
- JP 5999399 B